Europäisches Patentamt

European Patent Office

Office européen des brevets

(19)

(11) Numéro de publication: **0 037 323**
**B1**

(12) ## FASCICULE DE BREVET EUROPEEN

(45) Date de publication du fascicule du brevet:
**23.02.83**

(21) Numéro de dépôt: **81400463.6**

(22) Date de dépôt: **24.03.81**

(51) Int. Cl.³: **B 64 C 25/42**

(54) **Procédé et dispositif pour le freinage d'une roue par impulsions de pression intégrées.**

(30) Priorité: **25.03.80 FR 8006576**

(43) Date de publication de la demande:
**07.10.81 Bulletin 81/40**

(45) Mention de la délivrance du brevet:
**23.02.83 Bulletin 83/8**

(84) Etats contractants désignés:
**BE DE GB IT NL**

(56) Documents cités:
**FR-A-2 055 547**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Martin, Henri, 7, rue des Hêtres, F-44600 Saint-Nazaire (FR)**

(74) Mandataire: **Bonnetat, Christian et al, Cabinet PROPI Conseils 23 rue de Léningrad, F-75008 Paris (FR)**

ACTORUM AG

Procédé et dispositif pour le freinage d'une roue
par impulsions de pression intégrées

La présente invention concerne un procédé et un dispositif pour le freinage d'une roue, notamment d'un aéronef roulant sur le sol, au moyen d'un frein alimenté en fluide sous pression à partir d'une source à pression stable et par l'intermédiaire d'un organe de commande, tel qu'une pédale, actionné volontairement.

On sait que, dans un véhicule pour lequel la légèreté est primordiale, il est intéressant d'asservir la pression de freinage à un signal électrique provenant d'une commande à faible puissance et éloignée des organes de puissance. Pour cela, on connaît déjà des dispositifs de freinage dans lesquels ledit signal électrique est appliqué à des servovannes commandant le passage du fluide hydraulique entre une source à pression stable d'un tel fluide et les freins. Cependant, de telles servovannes sont des organes complexes, c'est-à-dire coûteux et vulnérables; de plus, elles présentent un poids important.

La présente invention a pour objet un procédé et un dispositif de freinage permettant d'éliminer l'utilisation de telles servovannes et donc d'éviter les inconvénients de celles-ci.

A cette fin, selon l'invention, le procédé pour le freinage d'une roue, notamment d'un aéronef roulant sur le sol, au moyen d'un frein alimenté en fluide sous pression à partir d'une source à pression stable et par l'intermédiaire d'un organe de commande actionné volontairement, est remarquable en ce que l'on transforme l'actionnement dudit organe de commande en une première suite temporelle d'impulsions électriques de fréquence constante telles que la durée de chacune de celles-ci est une fonction croissante de l'amplitude instantanée dudit actionnement, en ce que l'on transforme ensuite ladite première suite d'impulsions en une seconde suite temporelle correspondante d'impulsions de pression dudit fluide telle qu'à chaque impulsion électrique soit associée une impulsion de pression représentative de celle-ci, en ce qu'on intègre les impulsions de pression de ladite seconde suite afin d'obtenir une pression moyenne et en ce qu'on applique ladite pression moyenne audit frein.

Ainsi, cette pression moyenne intégrée est représentative de l'effort du pilote exercé sur ledit organe de commande, c'est-à-dire généralement une pédale. La relation entre cette pression moyenne et la durée de chaque impulsion est fidèle, à condition que le récepteur hydraulique ait une loi de raideur constante, ce qui est le cas d'un frein à disques à serrage hydraulique par exemple, lorsque les disques sont en contact.

De préférence, lesdites première et seconde suites sont constituées d'impulsions d'amplitude et de fréquence constantes, mais de largeur variable en fonction de l'amplitude de l'actionnement dudit organe de commande.

On remarquera qu'un frein à serrage hydraulique est remarquable en ce qu'il demande d'abord une quantité de fluide à faible pression pour la mise en contact des disques, puis en ce qu'il devient un obstacle de grande raideur à la pression hydraulique. Aussi est-il avantageux que l'on prévoie, en dessous d'un certain seuil de pression du fluide dans le frein, la suppression au moins partielle de l'intégration. Ainsi, on peut obtenir une rapide mise en contact des disques, le débit en direction du frein étant important, puis, lorsque les disques sont en contact, le niveau de la pression de freinage est asservi par les suites d'impulsions.

Avantageusement, le déplacement de l'organe de commande (enfoncement d'une pédale) peut être ressenti par le pilote comme le volume de fluide à déplacer dans le frein, de même que l'effort sur l'organe de commande peut représenter la pression appliquée sur le frein.

Ainsi, la mise en contact des disques peut être commandée dès le premier mouvement de l'organe de commande, et maintenue pendant une course morte qui s'effectue sous effort faible.

Puis la pression au frein peut croître sans retard avec l'effort appliqué suivant une loi agréable au pilote.

Un avantage important de l'invention réside en ce que l'organe hydraulique de commande peut être une simple électrovanne capable d'accepter des ordres en tension continue; par exemple, dans le cas des aéronefs, des ordres de freinage peuvent être envoyés automatiquement en utilisant simplement le 28 V continu de bord, sans qu'il soit nécessaire de passer par un organe spécifique.

De même, des ordres de défreinage provenant d'un dispositif d'antidérapage sont acceptables directement et simplement par coupure d'une ligne électrique du dispositif de commande de niveau de pression.

Différents dispositifs de sécurité peuvent être introduits dans le circuit électrique: par exemple, on peut limiter la pression maximale à une valeur prédéterminée inférieure à la pression de génération en utilisant par exemple un manocontacteur, dont le rôle serait de couper l'alimentation de l'électrovanne, quand la pression aurait atteint le tarage dudit manocontacteur.

Le système fonctionne alors de façon analogue à son mode normal de fonctionnement mais en boucle fermée.

Un dispositif pour la mise en œuvre de l'invention, comportant un frein alimenté en fluide sous pression à partir d'une source à pression stable et par l'intermédiaire d'un organe de commande dont l'actionnement volontaire est transformé, par un transmetteur, en un signal analogique fonction de l'amplitude dudit actionnement, est donc remarquable en ce qu'il comporte des premiers moyens pour transformer ledit signal analogique en une première suite temporelle d'impulsions électriques à fréquence constante, telles que la durée de chacune de celles-ci soit une fonction croissante de l'amplitude dudit signal analogique, des seconds moyens pour transformer ladite première suite d'impulsions en une seconde suite d'impulsions de pression dudit fluide, telle qu'à chaque impulsion électrique soit associée une impulsion de pression représentative de celle-ci et des moyens d'intégration desdites impulsions de pression de ladite seconde suite.

De préférence, lesdits premiers moyens comportent un multivibrateur pourvu d'au moins un composant à caractéristique variable en fonction de l'amplitude du signal analogique. Lesdits seconds moyens peuvent comporter une vanne à trois voies et à deux positions susceptible de mettre en communication, pour la première desdites positions, le frein et le retour vers ladite source et, pour la seconde desdites positions, le frein et la sortie de pression de ladite source. Avantageusement, cette vanne est constituée par un distributeur à tiroir, ce tiroir étant commandé par un électro-aimant recevant ladite première suite d'impulsions.

Les moyens d'intégration peuvent être formés par un orifice calibré.

Pour réaliser la suppression au moins partielle de l'intégration des impulsions de pression, on peut monter, en parallèle sur les moyens d'intégration, une canalisation comportant une vanne commandée par la pression du fluide dans le frein. Cette vanne peut alors être commandée par un manomètre relié à une prise de pression disposée dans la conduite reliant lesdits seconds moyens au frein.

Les figures du dessin annexé feront bien comprendre comment l'invention peut être réalisée.

La fig. 1 est une vue d'ensemble schématique d'un mode de réalisation du dispositif de freinage selon l'invention.

Les fig. 2a à 2e sont des diagrammes explicatifs du fonctionnement du dispositif de la fig. 1.

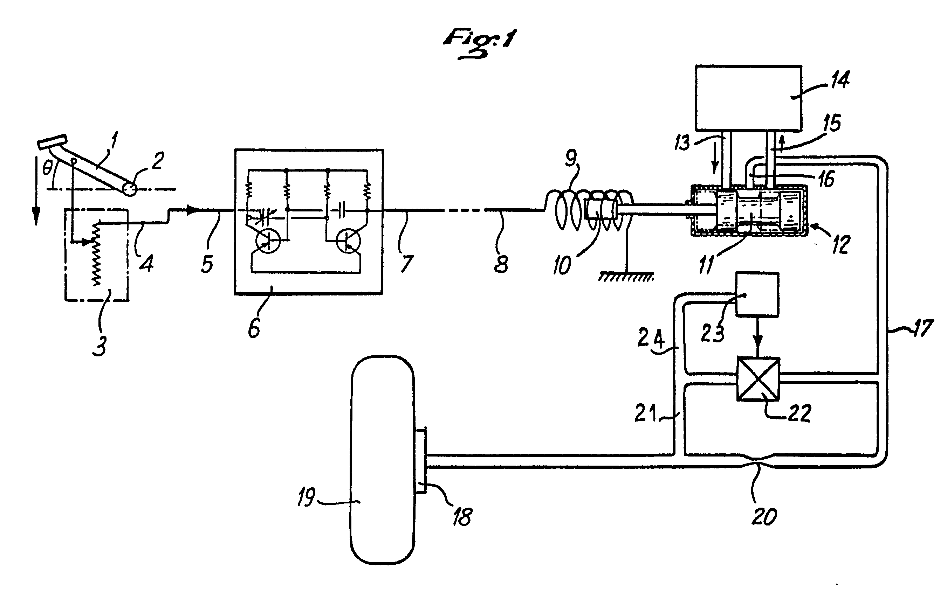

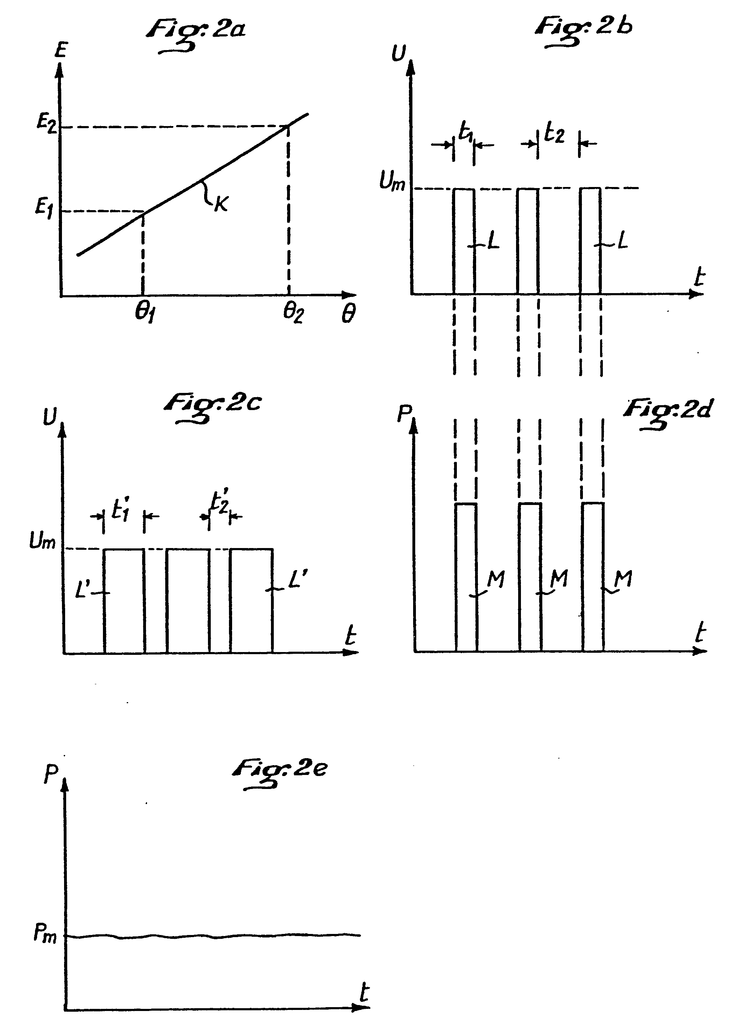

Le dispositif de freinage selon l'invention, montré par la fig. 1, comporte une pédale d'actionnement 1 pouvant tourner autour d'un axe 2 et commandant un transmetteur de pédale 3. Ce transmetteur 3 — qui, dans l'exemple représenté, est du type transmetteur de déplacement (mais qui pourrait aussi être du type capteur d'effort) — fournit à sa sortie 4 une grandeur électrique E (courant ou tension), qui est une fonction K de l'angle d'enfoncement θ de la pédale 1 (voir la fig. 2a).

La sortie 4 du transmetteur 3 est reliée à l'entrée de commande 5 d'un générateur 6 susceptible d'engendrer des signaux rectangulaires d'amplitude constante, mais de largeur et/ou d'espacement variables en fonction de l'amplitude de la grandeur électrique E appliquée à l'entrée de commande 5. Par exemple, comme illustré schématiquement sur la fig. 1, le générateur 6 présente la structure d'un multivibrateur dissymétrique, dont la dissymétrie peut être modifiée grâce à la variation de valeur d'un de ses constituants. Dans le présent exemple, on a supposé que l'une des capacités des liaisons croisées était du type condensateur variable et que l'entrée de commande 5 était constituée par l'électrode de polarisation de ce condensateur variable.

Ainsi, à la sortie 7 du générateur 6, on obtient des créneaux d'amplitude constante dont la durée et/ou l'espacement sont fonction de l'amplitude de la grandeur E et donc de l'angle d'enfoncement θ de la pédale 1. Les fig. 2b et 2c montrent respectivement, en fonction du temps t, le signal en créneaux U obtenu à la sortie 7 du générateur 6 dans le cas où la pédale est enfoncée d'un angle $\theta_1$ ou $\theta_2$. Dans le premier cas, les créneaux L, dont l'amplitude est $U_m$, ont une largeur $t_1$ et sont espacés de $t_2$, avec $t_1 < t_2$ et $t_1 + t_2$ = constante. Dans le second cas, les créneaux L', dont l'amplitude est toujours $U_m$, ont une largeur $t'_1$ et sont espacés de $t'_2$, avec $t'_1 > t'_2$ et $t'_1 + t'_2$ = constante.

Le signal d'entrée K peut être prévu (et programmé) pour que l'on puisse faire varier le rapport

$$K = \frac{t_1}{t_2} \left( \text{ou } \frac{t'_1}{t'_2} \right) \text{ de 0 à 100\%.}$$

Grâce à une ligne de transmission 8, le signal U apparaissant à la sortie 7 du générateur 6 alimente, éventuellement après amplification et mise en forme, la bobine 9 d'un électro-aimant, dont le noyau plongeur 10 est rendu solidaire d'un tiroir coulissant 11 d'un distributeur 12. Ce distributeur 12 comporte trois orifices dont le premier, 13, est relié à la sortie d'une source 14 de fluide sous pression stable (par exemple comprise entre 50 et 200 bar) et dont le second, 15, est réuni au retour de ladite source. Le troisième orifice 16 est relié, par une conduite 17, au frein 18 associé à une roue 19. Sur la conduite 17 est prévu un trou calibré 20.

En position de repos de l'électro-aimant 9, 10, le tiroir 11 est dans la position représentée sur la fig. 1 et relie l'orifice 16 avec le retour 15 de la source 14. En revanche, lorsque l'électro-aimant 9, 10 est excité, le tiroir prend la position en pointillés et relie l'orifice 16 avec la sortie 13 de la source 14.

Ainsi, à chaque créneau L, l'électro-aimant 9, 10 est excité pendant la durée $t_1$ correspondante, de sorte que le tiroir 11 est animé d'un mouvement de coulissement alternatif entre ces deux positions et qu'il en résulte qu'à l'orifice 16 la pression P du fluide varie temporellement selon des créneaux M synchrones des créneaux L. A chaque créneau L, une certaine quantité $q_1$ de fluide va de la source 14 au frein 18. A cause de l'orifice 20, cette quantité $q_1$ est, au moins en première approximation, proportionnelle à la racine carrée de la différence entre la pression $P_g$ de la source 14 et la pression moyenne $P_m$ dans le frein, ainsi qu'à la durée $t_1$, de sorte que l'on peut écrire:

$$q_1 = \sqrt{P_g - P_m} \times t_1 \times C_1,$$

où $C_1$ est un coefficient de proportionnalité.

En revanche, pendant chaque intervalle entre deux créneaux L, l'électro-aimant 9, 10 est désexcité et une certaine quantité $q_2$ de fluide va du frein 18 vers le retour 15. Cette quantité $q_2$ est approximativement proportionnelle à la racine carrée de la pression moyenne $P_m$ dans le frein et à la durée $t_2$, de sorte que:

$$q_2 = \sqrt{P_m} \times t_2 \times C_2,$$

où $C_2$ est un coefficient de proportionnalité.

La pression $P_m$ se stabilise après plusieurs cycles lorsque $q_1 = q_2$ (voir la fig. 2e). A ce moment,

$$\sqrt{P_g - P_m} \times t_1 \times C_1 = \sqrt{P_m} \times t_2 \times C_2$$

de sorte que

$$P_m = P_g \frac{C_1^2 \times k^2}{C_2^2 + C_1^2 \times k^2}, \text{ avec } k = \frac{t_1}{t_2}.$$

$$\text{Si } C_1 = C_2, \text{ alors } P_m = Pg \frac{k^2}{1 + k^2}.$$

On voit donc que, $P_g$ étant constante, la valeur de la pression moyenne $P_m$ dans le frein 18 varie

$$\text{avec le rapport } k = \frac{t_1}{t_2}.$$

Toutefois, des oscillations autour de la pression moyenne apparaissent en fonction de la raideur du circuit de fluide, de la fréquence des créneaux L et de la dimension de l'orifice calibré.

On peut envisager d'utiliser des orifices 20 différents pour les quantités $q_1$ allant de la source 14 au frein 18 et pour les quantités $q_2$ allant du frein 18 à la source 14, quoique cela ne soit pas représenté sur les dessins. Ainsi, on peut agir sur la forme de la loi liant $P_m$ à k.

Par ailleurs, notamment pour accélérer la mise au contact des disques du frein 18, on peut prévoir le shuntage de l'orifice 20. A cet effet, dans une conduite de dérivation 21 en parallèle sur l'orifice 20, on dispose une vanne 22 susceptible d'être commandée par un manomètre 23, dont la prise de pression 24 est reliée à la conduite 21. Le manomètre 23 maintient la vanne 22 ouverte en dessous d'un certain seuil de pression de la conduite 21, mais commande ladite vanne 22 à la fermeture au-dessus dudit seuil. Ainsi, l'orifice 20 est shunté à l'établissement initial de la pression dans le frein 18, de sorte que cet établissement initial peut être rapide. Ensuite, à partir dudit seuil, la vanne 22 se ferme, de sorte que le fluide est obligé de passer par l'orifice 20, qui intègre les impulsions de pression de la façon décrite ci-dessus. La fréquence constante desdites impulsions peut par exemple être de 50 Hz.

## Revendications

1. Procédé pour le freinage d'une roue (19), notamment d'un aéronef roulant sur le sol, au moyen d'un frein (18) alimenté en fluide sous pression à partir d'une source (14) à pression stable et par l'intermédiaire d'un organe de commande (1) actionné volontairement, caractérisé en ce que l'on transforme l'actionnement dudit organe de commande (1) en une première suite temporelle d'impulsions électriques (L, L') à fréquence constante, telles que la durée de chacune de celles-ci est une fonction croissante de l'amplitude instantanée dudit actionnement, en ce que l'on transforme ensuite ladite première suite d'impulsions (L, L') en une seconde suite temporelle correspondante d'impulsions de pression (P)

dudit fluide, telle qu'à chaque impulsion électrique (L, L') soit associée une impulsion de pression (M) représentative de celle-ci, en ce qu'on intègre les impulsions de pression (M) de ladite seconde suite afin d'obtenir une pression moyenne ($P_m$) et en ce qu'on applique ladite pression moyenne ($P_m$) audit frein (18).

2. Procédé selon la revendication 1, caractérisé en ce que lesdites première et seconde suites sont constituées d'impulsions (L, L', M) d'amplitude et de fréquence constantes, mais de largeur ($t_1$, $t'_1$) variable en fonction de l'amplitude de l'actionnement dudit organe de commande (1).

3. Procédé selon l'une des revendications 1 ou 2, caractérisé en ce que l'on prévoit, en dessous d'un certain seuil de pression du fluide dans le frein, la suppression au moins partielle de l'intégration.

4. Dispositif pour le freinage d'une roue, conformément au procédé de l'une des revendications 1 à 3, ce dispositif comportant un frein (18) alimenté en fluide sous pression à partir d'une source (14) à pression stable et par l'intermédiaire d'un organe de commande (1) dont l'actionnement volontaire est transformé, par un transmetteur (3), en un signal analogique fonction de l'amplitude dudit actionnement, caractérisé en ce qu'il comporte des premiers moyens (6) pour transformer ledit signal analogique en une première suite temporelle d'impulsions électriques (L, L'), à fréquence constante telles que la durée de chacune de celles-ci soit une fonction croissante de l'amplitude dudit signal analogique, des seconds moyens (9, 10, 11, 12) pour transformer ladite première suite d'impulsions (L, L') en une seconde suite d'impulsions de pression (M) dudit fluide, telle qu'à chaque impulsion électrique soit associée une impulsion de pression représentative de celle-ci et des moyens d'intégration (20) desdites impulsions de pression (M) de ladite seconde suite.

5. Dispositif selon la revendication 4, caractérisé en ce que lesdites premiers moyens (6) comportent un multivibrateur pourvu d'au moins un composant à caractéristique variable en fonction de l'amplitude du signal analogique.

6. Dispositif selon l'une des revendications 4 ou 5, caractérisé en ce que lesdits seconds moyens comportent une vanne (11, 12) à trois voies (13, 15, 16) et à deux positions, susceptible de mettre en communication, pour la première desdites positions, le frein (18) et le retour (15) vers ladite source (14) et, pour la seconde desdites positions, le frein (18) et la sortie de pression (13) de ladite source (14).

7. Dispositif selon la revendication 6, caractérisé en ce que ladite vanne est constituée par un distributeur à tiroir (11), ce tiroir (11) étant commmandé par un électro-aimant (9, 10) recevant ladite première suite d'impulsions (L, L').

8. Dispositif selon l'une quelconque des revendications 4 à 7, caractérisé en ce que lesdits moyens d'intégration sont formés par un orifice calibré (20).

9. Dispositif selon l'une quelconque des revendications 4 à 8, caractérisé en ce que, en parallèle sur lesdits moyens d'intégration (20), est montée une vanne (22) commandée par la pression du fluide dans le frein (18).

10. Dispositif selon la revendication 9, caractérisé en ce que ladite vanne (22) est commandée par un manomètre (23) relié à une prise de pression disposée dans la conduite reliant lesdits seconds moyens au frein (18).

## Patentansprüche

1. Verfahren zum Bremsen eines Rades (19), insbesondere eines auf dem Boden rollenden Flugzeugrades mittels einer Bremse (18), die durch ein von einer Druckquelle (14) abgegebenes Druckmittel über eine nach Wunsch zu betätigende Steuerung (1) betätigt wird, dadurch gekennzeichnet, dass die Betätigung der Steuerung (1) umgeformt wird in eine erste zeitliche Folge von elektrischen Impulsion (L, L') konstanter Frequenz, so dass deren Dauer eine zunehmende Funktion der Momentanamplitude der Betätigung darstellt, dass hiernach die erste Impulsfolge (L, L') in eine zweite den Druckimpulsen (P) des Strömungsmittels entsprechende zeitliche Folge überführt wird, so dass jedem elektrischen Impuls (L, L') ein ihm repräsentativer Druckimpuls (M) zugeordnet ist, dass die Druckimpulse (M) der zweiten Folge zur Erzielung eines mittleren Drucks ($P_m$) integriert werden, und dass dieser mittlere Druck ($P_m$) an die Bremse (18) gegeben wird.

2. Verfahren nach Anspruch 1, dadurch gekennzeichnet, dass die erste und zweite Folge aus Amplitudenimpulsen (L, L', M) konstanter Frequenz bestehen, dabei jedoch in Abhängigkeit von der Betätigungsamplitude der Steuerung (1) eine variable Breite ($t_1$, $t'_1$) aufweisen.

3. Verfahren nach einem der Ansprüche 1 oder 2, dadurch gekennzeichnet, dass unterhalb eines bestimmten Schwellenwerts des Druckmittels in der Bremse der Integrationsvorgang zumindest partiell unterdrückt wird.

4. Vorrichtung zum Abbremsen eines Rades nach dem Verfahren nach einem der Ansprüche 1 bis 3 bestehend aus einer Bremse (18), die ausgehend von einer Quelle (14) stabilen Drucks mit Druckmittel über eine Steuerung (1) gespeist wird, deren willentliche Betätigung von einem Wandler (3) in ein von der Amplitude der Betätigung abhängiges analoges Signal überführt wird, gekennzeichnet durch eine erste Einrichtung (6) zum Überführen des analogen Signals in eine erste zeitliche Folge elektrischer Impulse (L, L') konstanter Frequenz, so dass deren Dauer eine zunehmende Funktion der Amplitude des analogen Signals darstellt, eine zweite Einrichtung (9, 10, 11, 12) zum Überführen der ersten Impulsfolge (L, L') in eine zweite Folge von Druckimpulsen (M) des Strömungsmittels, so dass jedem elektrischen Impuls ein ihm repräsentativer Druckimpuls zugeordnet ist, und durch eine Einrichtung zur Integration (20) der Druckimpulse (M) der zweiten Folge.

5. Vorrichtung nach Anspruch 4, dadurch gekennzeichnet, dass die erste Einrichtung (6) einen Multivibrator aufweist, der zumindest einen Bauteil mit ein Abhängigkeit von der Amplitude des Analogsignals regelbarer Charakteristik besitzt.

6. Vorrichtung nach einem der Ansprüche 4 oder 5, dadurch gekennzeichnet, dass die zweite Einrichtung aus einem Ventil (11, 12) mit drei Wegen (13, 15, 16) und zwei Stellungen besteht, durch das in der ersten Stellung die Verbindung der Bremse (18) mit dem Rücklauf (15) zur Quelle (14) und in der zweiten Stellung die Verbindung der Bremse (18) mit dem Druckausgang (13) der Quelle (14) hergestellt werden kann.

7. Vorrichtung nach Anspruch 6, dadurch gekennzeichnet, dass das Ventil aus einer Schiebersteuerung (11) besteht, die von einem Elektromagneten (9, 10) gesteuert wird, der die erste Impulsfolge (L, L') empfängt.

8. Vorrichtung nach einem der Ansprüche 4 bis 7, dadurch gekennzeichnet, dass die Einrichtung der Integration durch eine kalibrierte Öffnung (20) gebildet ist.

9. Vorrichtung nach einem der Ansprüche 4 bis 8, dadurch gekennzeichnet, dass parallel zu der Integrationseinrichtung (20) ein Ventil geschaltet ist, das vom Druck des Strömungsmittels in der Bremse (18) gesteuert wird.

10. Vorrichtung nach Anspruch 9, dadurch gekennzeichnet, dass das Ventil (22) von einem Druckmesser (23) gesteuert wird, der an einer Druckzapfstelle liegt, die sich in der die zweite Einrichtung mit der Bremse (18) verbindenden Leitung befindet.

## Claims

1. A process for braking a wheel (19), particularly of an aircraft taxiing on the ground, by means of a brake (18) supplied with fluid under pressure from a source (14) under stable pressure, and via a control member (1) actuated voluntarily, said process being characterized by the steps of:
— converting the actuation of said control member (1) into a first temporal sequence of electrical pulses (L, L') at constant frequency, such that the duration of each of them is a function of the instantaneous amplitude of said actuation,
— converting said first sequence of pulses (L, L') into a corresponding second temporal sequence of fluid pressure pulses (M), such that with each electrical pulse (L, L') is associated a pressure pulse (M) representative of said electrical pulse,
— integrating the pressure pulses (M) of said second sequence in order to obtain a mean pressure ($P_m$), and
— applying said mean pressure ($P_m$) to said brake (18).

2. The process of claim 1, characterized in that said first and second sequences are constituted by pulses (L, L', M) of constant amplitude and frequency, but of variable width ($t_1$, $t'_1$) as a function of the amplitude of the actuation of said control member (1).

3. The process of either one of claims 1 or 2, characterized in that, below a certain pressure threshold of the fluid in the brake the at least partial suppression of the integration is provided.

4. A device for braking a wheel, in accordance with the process of any one of claims 1 to 3, said device comprising a brake (18) supplied with pressurised fluid from a source (14) under stable pressure and via a control member (1) of which the voluntary actuation is converted by a transmitter (3) into a analog signal function of the amplitude of said actuation, characterized in that it comprises first means (6) for converting said analog signal into a first temporal sequence of electrical pulses (L, L') at constant frequency, such that the duration of each of them is a function of the amplitude of said analog signal, second means (9, 10, 11, 12) for converting said first sequence of pulses (L, L') into a second sequence of fluid pressure pulses (M), such that with each electrical pulse is associated a pressure pulse representative of said electrical pulse and means (20) for integrating said pressure pulses (M) of said second sequence.

5. The device of claim 4, characterized in that said first means (6) comprise a multivibrator provided with at least one component with characteristic variable as a function of the amplitude of the analog signal.

6. The device of either one of claims 4 or 5, characterized in that said second means comprise a three-way (13, 15, 16) two-position valve (11, 12), adapted to place in communication, for the first of said position, the brake (18) and the return (15) towards said source (14) and, for the second of said positions, the brake (18) and the pressure outlet (13) of said source (14).

7. The device of claim 6, characterized in that said valve is constituted by a slide distributor (11), said slide (11) being controlled by an electromagnet (9, 10) receiving said first sequence of pulses (L, L').

8. The device of any one of claims 4 to 7, characterized in that said integration means are formed by a calibrated orifice (20).

9. The device of any one of claims 4 to 8, characterized in that a valve (22) controlled by the pressure of the fluid in the brake (18) is mounted in parallel on said integration means (20).

10. The device of claim 9, characterized in that said valve (22) is controlled by a pressure gauge (23) connected to a pressure inlet disposed in the conduit connecting said second means to the brake (18).

Fig.1

Fig. 2a

Fig. 2b

Fig. 2c

Fig. 2d

Fig. 2e

9